# EUROPÄISCHE PATENTSCHRIFT

(11) **EP 2 168 865 B1**
(45) Veröffentlichungstag und Bekanntmachung des Hinweises auf die Patenterteilung: **05.03.2014**
(21) Anmeldenummer: 09010714.5
(22) Anmeldetag: 20.08.2009
(51) Int. Cl.: B62M 9/135

(54) **Kettenschaltung für ein Fahrrad**
Chain switching for a bicycle
Embrayage à chaîne pour un vélo

(30) Priorität: 29.09.2008 DE 102008049360
(43) Veröffentlichungstag der Anmeldung: 31.03.2010
(60) Teilanmeldung: 13004269.0
(73) Patentinhaber: SRAM Deutschland GmbH, 97424 Schweinfurt (DE)
(72) Erfinder: Auer, Marcus, 97525 Schwebheim (DE)

(56) Entgegenhaltungen:
- EP-A2- 1 447 317
- EP-A2- 1 798 143
- DE-B- 1 225 514

## Beschreibung

Die Erfindung betrifft einen Umwerfer als Bestandteil einer Kettenschaltung für ein Fahrrad zur Befestigung an einem Sitzrohr eines Rahmens, umfassend einen Grundkörper, eine Klemmschelle mit einer Schellenschraube, einen ersten angefederten Parallelogrammhebel und einen zweiten Parallelogrammhebel sowie eine Kettenführung, wobei der Grundkörper den oberen Abschluss des Umwerfers am Sitzrohr bildet und die Parallelogrammhebel nach unten weisend angeordnet sind.

Gemäß der Europäischen Patentanmeldung EP 1 447 317 A1 ist ein Umwerfer einer Kettenschaltung veröffentlicht worden, bestehend aus einem Grundkörper, zwei hängend angeordneten Parallelogrammhebeln, von denen der außen liegende mit einem Betätigungshebel einteilig verbunden ist, einer Kettenführung sowie einer Feder, die die Kettenführung gegen den innen liegenden Parallelogrammhebel anfedert. Der Grundkörper weist zu seiner Befestigung einen Arm auf, der das Sitzrohr zusammen mit einem Schwenkarm umschließt und mit diesem verschraubbar ist, wobei der Schwenkarm mit dem Grundkörper über ein Scharnier verbunden ist.

Gemäß dem vorliegenden Erfindungsvorschlag werden möglichst viele Funktionen auf den Grundkörper konzentriert, was in erster Linie die Befestigung des Grundkörpers am Sitzrohr betrifft, in zweiter Linie aber auch die Lage der Feder berücksichtigt. Der Grundkörper weist ähnlich dem Arm des obengenannten Stand der Technik eine konkave Zylinderfläche auf, die sich an die Form des Sitzrohres anschmiegt und so dem Grundkörper eine einstellbare Position verleiht, in der er nur noch befestigt zu werden braucht. Die hierzu benötigte Klemmschelle ist mit einem ersten Ende am Grundkörper befestigt, umschlingt das Sitzrohr und wird gegenüber an seinem Schellenende mittels einer Schellenschraube am Grundkörper verspannt. Das Schellenende weist ein Gewindeteil auf, in das die Schellenschraube eingedreht wird, deren Kopf sich an einem Gegenhalter mit einer Bohrung abstützt und das Gewindeteil mit dem Schellenende am Grundkörper verspannt. Der Gegenhalter ist am Grundkörper derart angeordnet, dass sich für die Schellenschraube eine Montagerichtung ergibt, die durch ein Fenster am zweiten Parallelogrammhebel verläuft. Will man den Umwerfer am Sitzrohr verspannen, so muss man mit einem Werkzeug durch das Fenster des zweiten Parallelogrammhebels bis zum Kopf der Schellenschraube vordringen, um diesen zu verdrehen und die Klemmschelle zu spannen. Das Fenster im zweiten Parallelogrammhebel kommt dadurch zustande, dass dieser aus Gründen einer soliden Lagerung zwei Arme aufweist, die mit dem Grundkörper eine breite erste Lagerstelle bilden. Die zweite Lagerstelle befindet sich zwischen dem zweiten Parallelogrammhebel und der Kettenführung. Der Vorteil der Fensteranordnung liegt sowohl in der optischen Darstellung des Umwerfers als auch in der geschützten Position der Spannelemente.

Der Grundkörper weist ferner eine tangential zum Durchmesser des Sitzrohres verlaufende Rampe auf, auf der das Gewindeteil mit dem Schellenende beim Spannen der Klemmschelle aufgleiten kann. Die aus Federbandstahl hergestellte Klemmschelle umschlingt am Schellenende das Gewindeteil und endet in einem nach hinten weisenden Lappen, der an der Klemmschelle vernietet, verschraubt, gefügt oder verschweißt wird. Der Lappen kann entweder innerhalb oder außerhalb der Klemmschelle verlaufen, wobei die innen liegende Variante optische Vorteile mit sich bringt.

Eine nicht beanspruchte Ausführungsform dieser Anmeldung bezieht sich ferner auf die Lage der Feder, die den ersten Parallelogrammhebel gegen den Grundkörper anfedert. Dieser erste Parallelogrammhebel ist unterhalb des zweiten Parallelogrammhebels angeordnet. Die Feder am Grundkörper ist koaxial zur ersten Lagerstelle zwischen einem ersten Arm und einem zweiten Arm des ersten Parallelogrammhebels angeordnet. Dieser erste Parallelogrammhebel weist ferner zwei Arme auf, mit denen er am Grundkörper schwenkbar gelagert ist und eine dritte Lagerstelle bildet. Mit dem ersten Arm ist ein Betätigungshebel verbunden, an dem ein Zugseil zur Betätigung des Umwerfers befestigt werden kann. Die Arme werden mit der Basis am Grundkörper vorzugsweise durch einen Bolzen verbunden, der gleichzeitig die Führung für die koaxial zu diesem angeordnete Feder darstellt, die als Spiralfeder ausgeführt ist und deren Enden nach auswärts abgebogen sind, wobei sich das eine Ende an der Basis des Grundkörpers abstützt und das andere Ende sich mit Vorspannung am ersten Parallelogrammhebel anlegt. Durch die Anordnung der Feder ergibt sich eine große Stützweite, die aus Gründen der Symmetrie auch an einer vierten Lagerstelle zu finden ist, die der erste Parallelogrammhebel mit der Kettenführung bildet. Während die dritte Lagerstelle durch einen Bolzen gebildet wird, besteht die vierte Lagerstelle aus zwei separaten Lagerungen, die wegen ihrer großen Entfernung voneinander vorzugsweise nicht mit einem Bolzen in Verbindung stehen. Der Vorteil dieser Anordnung liegt in der stabilen Führung der Kette, wenn hohe Schaltkräfte auf den Umwerfer vor allem im Gelände oder am Berg wirken. Es hat sich ferner als zweckmäßig erwiesen, dass der erste Parallelogrammhebel und der zweite Parallelogrammhebel hängend, also nach unten weisend am Grundkörper angeordnet sind. Hierdurch liegen die wichtigsten Funktionsteile des Umwerfers optimal geschützt vor Verschmutzung und Zerstörung durch äußere Gewaltanwendung. Die Zugänglichkeit der Schellenschraube ist nicht durch die Kettenführung eingeschränkt.

Die Erfindung hat es sich zur Aufgabe gemacht, einen Umwerfer als Bestandteil einer Kettenschaltung zu schaffen, dessen Funktionsteile vor Verschmutzung und Zerstörung optimal geschützt sind und dessen Grundkörper durch eine Klemmschelle an einem Sitzrohr mittels einer unauffällig angeordneten Klemmschraube befestigt ist, wobei die Befestigungsmittel uneingeschränkt zugänglich sind.

Die Lösung der Aufgabe ist in den kennzeichnenden Teilen des Hauptanspruches und des nebengeordneten Anspruchs beschrieben. Ausgestaltungen sind den jeweiligen Unteransprüchen zu entnehmen.

Anhand mehrerer perspektivischer Zeichnungen wird ein Umwerfer einer Kettenschaltung eines Fahrrades erläutert. Es zeigen:
- Fig. 1: einen Grundkörper mit einer Klemmschelle;
- Fig. 2: einen ersten Parallelogrammhebel mit einer Feder an einer dritten Lagerstelle;
- Fig. 3: eine Kettenführung mit einer zweiten und einer vierten Lagerstelle;
- Fig. 4: den Umwerfer mit der Klemmschelle, die durch eine Schellenschraube in einer Montagerichtung spannbar ist;
- Fig.5: den Grundkörper mit dem zweiten Parallelogrammhebel, der zwischen der ersten und der zweiten Lagerstelle ein Fenster aufweist.

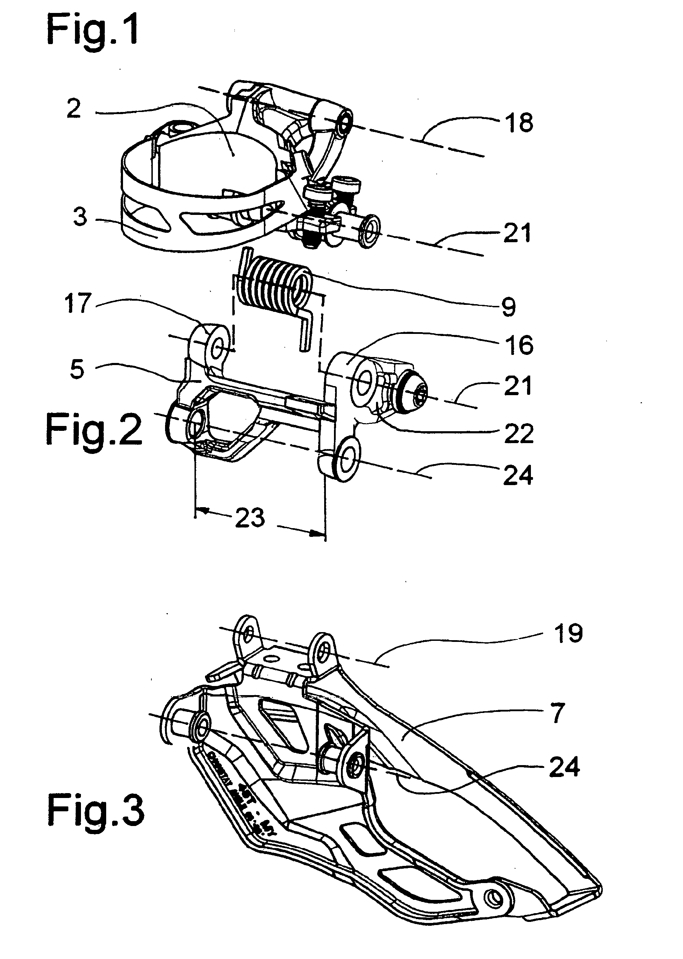

Gemäß der Fig. 1 wird ein Grundkörper 2 eines Umwerfers 1 mit einer Klemmschelle 3 in montiertem Zustand dargestellt. Es sind eine erste Lagerstelle 18 für die gelenkige Lagerung eines zweiten Parallelogrammhebels 6 und eine dritte Lagerstelle 21 für die gelenkige Lagerung eines ersten Parallelogrammhebels 5 zu erkennen, die Teile eines Parallelogramms zum Umlegen einer Kette auf verschieden große Zahnkränze an einem Tretlager des Fahrrades sind.

Die Fig. 2 zeigt den ersten Parallelogrammhebel 5 mit einem ersten Arm 16 und einem zweiten Arm 17 sowie mit einem Betätigungshebel 22 für die Montage eines Zugseils, der mit dem ersten Arm 16 verbunden ist. Der erste Arm 16 und der zweite Arm 17 weisen an ihren Enden Bohrungen für die dritte Lagerstelle 21 auf, durch die ein hier nicht dargestellter Bolzen montierbar ist, der gleichzeitig als Führung einer Feder 9 dient. Ein ausgestelltes Ende der Feder 9 stützt sich am Grundkörper 2 und das andere Ende am ersten Parallelogrammhebel 5 ab, um eine Vorspannung des ersten Parallelogrammhebels 5 zum Grundkörper 2 zu erzeugen. Der erste Parallelogrammhebel 5 weist schließlich noch zwei Bohrungen für eine vierte Lagerstelle 24 auf, an der die Kettenführung 7 gelenkig gelagert ist, wobei die Bohrungen zur Erzeugung einer großen Stützweite 23 ähnlich weit voneinander entfernt sind, wie der erste Arm 16 vom zweiten Arm 17 für die dritte Lagerstelle 21.

Aus der Fig. 3 geht eine Kettenführung 7 hervor, die eine gemeinsame zweite Lagerstelle 19 mit dem zweiten Parallelogrammhebel 6 und die bereits erwähnte gemeinsame vierte Lagerstelle 19 mit dem ersten Parallelogrammhebel 5 zur Vervollständigung des Parallelogramms am Umwerfer 1 aufweist.

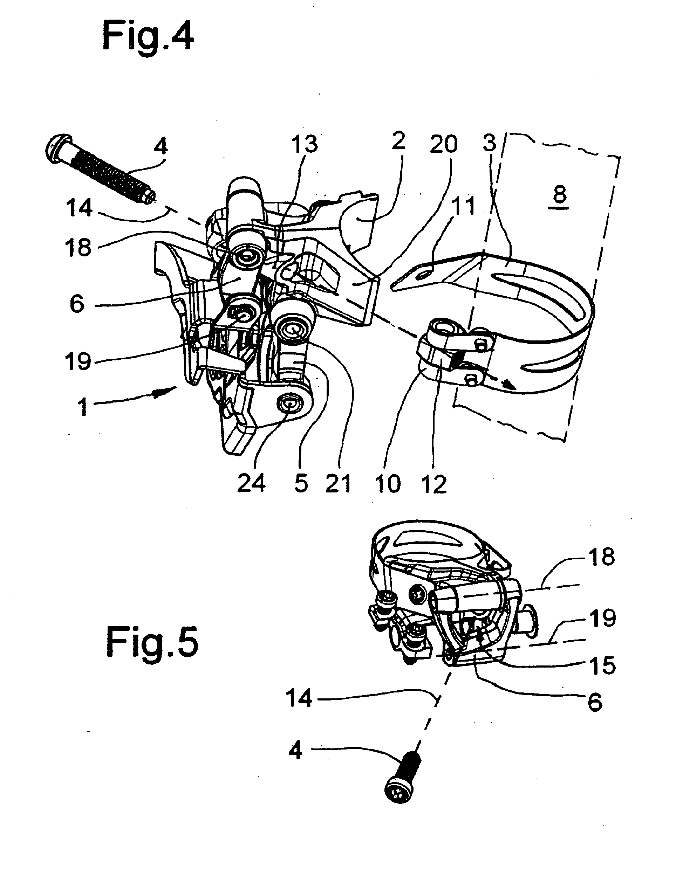

Die Fig. 4 stellt den Umwerfer 1 und die Klemmschelle 3 in demontierter Form dar. Die Klemmschelle 3 weist ein erstes Ende 11 auf, mit dem sie am Grundkörper 2 befestigt wird. An einem Schellenende 10 auf der anderen Seite der Klemmschelle 3 ist ein Gewindeteil 12 angeordnet, in das die Schellenschraube 4 eindrehbar ist, die einen Gegenhalter 13 durchragt, der der Schellenschraube 4 eine bestimmte Montagerichtung 14 vorgibt. Hierbei wird das Schellenende 10 über eine Rampe 20 in der Montagerichtung 14 herangezogen, bis der Grundkörper 2 am Sitzrohr 8 festgespannt ist.

Es wird gezeigt, wie der Umwerfer 1 mit der Klemmschelle 3 mittels einer Schellenschraube 4 an einem Sitzrohr 8 befestigt werden kann, nämlich durch
- die Fixierung eines ersten Endes 11 der Klemmschelle 3 am Grundkörper 2;
- Anlegen des Grundkörpers 2 am Sitzrohr 8;
- Umschlingung des Sitzrohres 8 mit der Klemmschelle 3;
- Einführen der Schellenschraube 4 durch das Fenster 15 und den Gegenhalter 13 in das Gewindeteil 12 entlang der Montagerichtung 14;
- Festziehen der Schellenschraube 4.

Schließlich zeigt die Fig. 5 den Grundkörper 2 mit dem zweiten Parallelogrammhebel 6, der mit seinen beiden Armen ein Fenster 15 bildet, durch welches sich die Montagerichtung 14 erstreckt und die Schellenschraube 4 eingelegt und festgedreht wird. Vorteile sind darin zu sehen, dass vom Umwerfer auf der dem Tretlager gegenüberliegenden Fahrradseite kein Bauraum beansprucht wird und dass ferner bewegliche Funktionsteile vor Schmutz und äußerer Gewalteinwirkung geschützt sind.

## Patentansprüche

1. Umwerfer als Bestandteil einer Kettenschaltung für ein Fahrrad zur Befestigung an einem Sitzrohr eines Rahmens, umfassend einen Grundkörper (2), eine Klemmschelle (3) mit einer Schellenschraube (4), einen ersten angefederten Parallelogrammhebel (5) und einen zweiten Parallelogrammhebel (6) sowie eine Kettenführung (7), wobei der Grundkörper (2) den oberen Abschluss des Umwerfers (1) am Sitzrohr bildet und die Parallelogrammhebel (5, 6) nach unten weisend angeordnet sind,
**dadurch gekennzeichnet,**
**dass** der Grundkörper (2) einen Gegenhalter (13) mit einer Bohrung für die Schellenschraube (4) zum Spannen der Klemmschelle (3) über ein Gewindeteil (12) in einem Schellenende (10) der Klemmschelle (3) aufweist, der der Schellenschraube (4) eine Montagerichtung (14) vorgibt, die durch ein Fenster (15) am zweiten Parallelogrammhebel (6) verläuft.

2. Umwerfer nach Anspruch 1,
**dadurch gekennzeichnet,**
**dass** die Schellenschraube (4) durch das Fenster (15) mit einem handelsüblichen Werkzeug montiert und demontiert werden kann.

3. Umwerfer nach Anspruch 1 oder 2,
**dadurch gekennzeichnet,**
**dass** der Grundkörper (2) eine Rampe (20) aufweist, auf der das Gewindeteil (12) mit dem Schellenende (10) beim Spannen der Klemmschelle (3) aufgleiten kann.

4. Umwerfer nach einem der Ansprüche 1 bis 3,
**dadurch gekennzeichnet,**
**dass** ein erstes Ende (11) der Klemmschelle (3) mit dem Grundkörper (2) verbunden ist, während das Schellenende (10) durch die Schellenschraube (4) bei der Montage des Umwerfers (1) mit dem Grundkörper (2) verspannbar ist.

## Claims

1. Knockover as an integral part of a derailleur for a bicycle for fastening to a seat tube of a frame, comprising a basic body (2), a clamping clip (3) with a clip screw (4), a first sprung parallelogram lever (5) and a second parallelogram lever (6) and also a chain guide (7), the basic body (2) forming the upper termination of the knockover (1) on the seat tube, and the parallelogram levers (5, 6) being arranged so as to point downwards, **characterized in that** the basic body (2) has a stay (13) with a bore for the clip screw (4) for tensioning the clamping clip (3) via a threaded part (12) in a clip end (10) of the clamping clip (3), the said stay predetermining for the clip screw (4) a mounting direction (14) which runs through an aperture (15) on the second parallelogram lever (6).

2. Knockover according to Claim 1, **characterized in that** the clip screw (4) can be mounted and demounted through the aperture (15) by means of a commercially available tool.

3. Knockover according to Claim 1 or 2, **characterized in that** the basic body (2) has a ramp (20), on which the threaded part (12) can slide with the clip end (10) during the tensioning of the clamping clip (3).

4. Knockover according to one of Claims 1 to 3, **characterized in that** a first end (11) of the clamping clip (3) is connected to the basic body (2), while the clip end (10) can be braced together with the basic body (2) by the clip screw (4) during the mounting of the knockover (1).

## Revendications

1. Dérailleur appartenant à un changement de vitesses à chaîne pour une bicyclette, destiné à être fixé à un tube de siège d'un cadre, comprenant un corps de base (2), un collier de serrage (3) avec une vis de collier de serrage (4), un premier levier à parallélogramme à ressort (5) et un deuxième levier à parallélogramme (6) ainsi qu'un guide de chaîne (7), le corps de base (2) formant la terminaison supérieure du dérailleur (1) sur le tube de siège et les leviers à parallélogramme (5, 6) étant disposés de manière orientée vers le bas, **caractérisé en ce que**
le corps de base (2) présente un support conjugué (13) avec un alésage pour la vis de collier de serrage (4) afin de serrer le collier de serrage (3) par le biais d'une partie filetée (12) dans une extrémité de collier de serrage (10) du collier de serrage (3), qui prédéfinit une direction de montage (14) pour la vis de collier de serrage (4), qui s'étend à travers une fenêtre (15) au niveau du deuxième levier à parallélogramme (6).

2. Dérailleur selon la revendication 1,
**caractérisé en ce que**
la vis de collier de serrage (4) peut être montée et démontée au moyen d'un outil usuel à travers la fenêtre (15).

3. Dérailleur selon la revendication 1 ou 2,
**caractérisé en ce que**
le corps de base (2) présente une rampe (20) sur laquelle peut glisser la partie filetée (12) avec l'extrémité de collier de serrage (10) lors du serrage du collier de serrage (3).

4. Dérailleur selon l'une quelconque des revendications 1 à 3,
**caractérisé en ce**
**qu'**une première extrémité (11) du collier de serrage (3) est connectée au corps de base (2), tandis que l'extrémité de collier de serrage (10) peut être serrée par la vis de collier de serrage (4) lors du montage du dérailleur (1) avec le corps de base (2).
